# EUROPÄISCHE PATENTANMELDUNG

(11) **EP 4 344 816 A1**
(43) Veröffentlichungstag der Anmeldung: **03.04.2024**
(21) Anmeldenummer: 23200143.8
(22) Anmeldetag: 27.09.2023
(51) Int. Cl.: B23K 26/402, B23K 26/53, C03B 33/02, C03B 33/09, B23K 103/00

(54) **TRENNVORRICHTUNG UND VERFAHREN**

(30) Priorität: 28.09.2022 DE 202022105478 U
(71) Anmelder: 4JET microtech GmbH, 52477 Alsdorf (DE)
(72) Erfinder: NOBIS, Anke, 52146 Würselen (DE); BASSEN, Hannes, 52477 Alsdorf (DE); WEIDLICH, Philip, 52441 Linnich (DE)
(74) Vertreter: Dilg, Haeusler, Schindelmann Patentanwaltsgesellschaft mbH

(57) **Zusammenfassung**

Beschrieben wird ein Verfahren aufweisend: Erzeugen einer ersten Schädigungslinie in einem Werkstück, wobei die erste Schädigungslinie mit Abstand von einer gewünschten Konturlinie angeordnet ist und einen ersten Teil des Werkstücks definiert; wobei der erste Teil des Werkstücks auf einer der gewünschten Konturlinie abgewandten Seite der ersten Schädigungslinie angeordnet ist und sich von der ersten Schädigungslinie weg erstreckt; und Entfernen des ersten Teils des Werkstücks. Ferner wird eine entsprechende Trennvorrichtung beschrieben.

## Beschreibung

### TECHNISCHES GEBIET

Die vorliegende Offenbarung betrifft das Gebiet der Trennvorrichtungen zum Trennen von Werkstücken.

### HINTERGRUND

Die EP 2 781 296 B1 offenbart ein Verfahren zum Erzeugen einer Kontur in einem flächigen Substrat und zum Abtrennen der Kontur vom Substrat, wobei in einem Konturdefinitionsschritt mittels eines über das Substrat geführten Laserstrahles entlang einer die zu erzeugende Kontur kennzeichnenden Konturlinie im Substratmaterial eine Vielzahl einzelner Zonen innerer Schädigung erzeugt wird, und in einem nach dem Konturdefinitionsschritt durchgeführten Materialabtrag- und optional zusätzlichen Materialverformschritt mittels eines über das Substrat geführten und optional zusätzlich auf das Substrat eingestrahlten Laserstrahls durch Materialabtrag und optional zusätzlich durch plastische Verformung aus dem Substrat Substratmaterial herausgelöst und/oder vom Substrat Substratmaterial abgelöst wird, wobei der nach dem Konturdefinitionsschritt durchgeführte Materialabtrag - und optional zusätzliche Materialverformschritt ein(en) Materialabtragschritt ist oder umfasst, in dem mittels eines über das Substrat geführten, materialabtragenden Laserstrahles entlang einer längs der Konturlinie jedoch beanstandet von dieser sowie in der abzutrennenden Kontur verlaufenden Abtraglinie das Substratmaterial über die gesamte Substratdicke abgetragen wird.

### ZUSAMMENFASSUNG

Angesichts der oben beschriebenen Situation gibt es ein Bedürfnis für eine Technik, welche ein effizientes Trennen eines Werkstücks erlaubt.

Diesem Bedürfnis wird durch die unabhängigen Ansprüche Rechnung getragen. Einige vorteilhafte Ausführungsformen sind in den abhängigen Ansprüchen angegeben.

Gemäß einem ersten Aspekt der hierin offenbarten Gegenstände wird ein Verfahren bereitgestellt.

Gemäß einer Ausführungsform des ersten Aspektes wird ein Verfahren bereitgestellt, das Verfahren aufweisend: Erzeugen einer ersten Schädigungslinie in einem Werkstück, wobei die erste Schädigungslinie mit Abstand von einer gewünschten Konturlinie angeordnet ist und einen ersten Teil eines Werkstücks definiert; wobei der erste Teil des Werkstücks auf einer der gewünschten Konturlinie abgewandten Seite der ersten Schädigungslinie angeordnet ist und sich von der ersten Schädigungslinie weg erstreckt; und Entfernen des ersten Teils des Werkstücks.

Gemäß einem zweiten Aspekt der hierin offenbarten Gegenstände wird eine Trennvorrichtung offenbart.

Gemäß einer Ausführungsform des zweiten Aspektes wird eine Trennvorrichtung offenbart, die Trennvorrichtung aufweisend: eine erste Laservorrichtung zum Abgeben einer ersten Laserstrahlung; eine Steuervorrichtung, welche konfiguriert ist zum Steuern der ersten Laservorrichtung und dadurch Erzeugen einer ersten Schädigungslinie in einem Werkstück mit einer ersten Laserstrahlung, wobei die erste Schädigungslinie mit Abstand von einer gewünschten Konturlinie angeordnet ist und einen ersten Teil des Werkstücks definiert; wobei der erste Teil des Werkstücks auf einer der gewünschten Konturlinie abgewandten Seite der ersten Schädigungslinie angeordnet ist und sich von der ersten Schädigungslinie weg erstreckt; wobei die Steuervorrichtung konfiguriert ist, um ein Entfernen des ersten Teils des Werkstücks zu bewirken.

### BESCHREIBUNG EXEMPLARISCHER AUSFÜHRUNGSFORMEN

Auch wenn hierin bestimmte Nachteile früherer Technologien erwähnt werden, soll der beanspruchte Gegenstand nicht auf Implementierungen beschränkt werden, die einige oder alle der erwähnten Nachteile der früheren Technologien beheben. Ferner soll, auch wenn bestimmte Vorteile der hierin offenbarten Gegenstände in der vorliegenden Offenbarung erwähnt oder impliziert werden, der beanspruchte Gegenstand nicht auf Implementierungen beschränkt werden, die einige oder alle dieser Vorteile aufweisen.

Ein Verfahren gemäß dem ersten Aspekt weist ein Erzeugen einer Schädigungslinie (nachfolgend als erste Schädigungslinie bezeichnet) in einem Werkstück auf. Gemäß einer Ausführungsform ist die erste Schädigungslinie mit Abstand von einer gewünschten Konturlinie angeordnet. Gemäß einer weiteren Ausführungsform definiert die erste Schädigungslinie einen ersten Teil des Werkstücks. Gemäß einer Ausführungsform ist der erste Teil des Werkstücks auf einer der gewünschten Konturlinie abgewandten Seite der ersten Schädigungslinie angeordnet. Gemäß einer weiteren Ausführungsform erstreckt sich der erste Teil des Werkstücks von der ersten Schädigungslinie weg. Gemäß einer weiteren Ausführungsform weist das Verfahren ein Entfernen des ersten Teils des Werkstücks auf.

Eine Trennvorrichtung gemäß dem zweiten Aspekt weist gemäß einer Ausführungsform eine Laservorrichtung auf (nachfolgend als erste Laservorrichtung bezeichnet). Gemäß einer weiteren Ausführungsform ist die erste Laservorrichtung konfiguriert zum Abgeben einer Laserstrahlung (nachfolgend als erste Laserstrahlung bezeichnet). Gemäß einer weiteren Ausführungsform weist die Trennvorrichtung eine Steuervorrichtung auf. Gemäß einer Ausführungsform ist die Steuervorrichtung konfiguriert zum Steuern der ersten Laservorrichtung und dadurch Erzeugen einer Schädigungslinie (nachfolgend als erste Schädigungslinie bezeichnet) in einem Werkstück mit der ersten Laserstrahlung. Gemäß einer Ausführungsform ist die erste Schädigungslinie mit Abstand von einer gewünschten Konturlinie angeordnet. Gemäß einer weiteren Ausführungsform definiert die erste Schädigungslinie einen ersten Teil des Werkstücks. Gemäß einer weiteren Ausführungsform ist der erste Teil des Werkstücks auf einer der gewünschten Konturlinie abgewandten Seite der ersten Schädigungslinie angeordnet und erstreckt sich von der ersten Schädigungslinie weg. Gemäß einer Ausführungsform ist die Steuervorrichtung konfiguriert, um ein Entfernen des ersten Teils des Werkstücks zu bewirken.

Vorstehend wurde beim ersten Auftreten eines Merkmals auf das Merkmal mit dem unbestimmten Artikel Bezug genommen, sowohl bei der Beschreibung von Ausführungsformen des ersten Aspekts als auch bei der Beschreibung von Ausführungsformen des zweiten Aspektes. Es sollte sich jedoch verstehen, dass die Verwendung des unbestimmten Artikels hier nicht einschränkend ist und dass jedenfalls in einer Ausführungsform der erste Aspekt und der zweite Aspekt zwei verschiedene Aspekte desselben Gegenstands sind.

Mindestens einige der Aspekte und Ausführungsformen der hierin offenbarten Gegenstände basieren auf der Idee, dass in einem vorgelagerten Prozess bereits ein Großteil eines ungewünschten abzutrennenden Teils (der erste Teil) des Werkstücks entfernt wird und erst anschließend eine Trennung entlang der gewünschten Konturlinie erfolgt. Die Kombination dieser beiden Schritte kann in der Summe einen schnellen und präzisen Trennprozess ermöglichen. Ein Teil des Werkstücks zwischen der ersten Schädigungslinie und der gewünschten Konturlinie kann die gewünschte Konturlinie vor Beschädigung bei der Entfernung des ersten Teils des Werkstücks schützen. Beispielsweise können ungewollte Risse und Chipping an der ersten Schädigungslinie gestoppt werden.

Im Folgenden werden exemplarische Ausführungsformen der hierin offenbarten Gegenstände beschrieben, wobei beispielsweise auf ein Verfahren und eine Trennvorrichtung Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren beschrieben, während andere Ausführungsformen mit Bezug auf eine Vorrichtung beschrieben werden. Wiederum andere Ausführungsformen werden mit Bezug auf eine Steuervorrichtung zum Interagieren mit weiteren Elementen der Trennvorrichtung beschrieben. Jedoch wird der Fachmann der vorstehenden und der nachfolgenden Beschreibung, den Ansprüchen und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren bezieht, mit einem Merkmal kombinierbar, welches sich auf eine Vorrichtung bezieht, und umgekehrt. Ferner sind Merkmale auch unabhängig von der Offenbarungsstelle kombinierbar, beispielsweise unabhängig davon, ob das betreffende Merkmal in der allgemeinen Beschreibung, in der Beschreibung der Zeichnungen, den Ansprüchen, oder in den Zeichnungen selbst offenbart ist.

Gemäß einer Ausführungsform kann ein hierin offenbartes Verfahren die Funktionalität einer hierin offenbarten Vorrichtung definieren, ohne auf die vorrichtungsspezifischen Merkmale beschränkt zu sein. Insofern soll jede hierin offenbarte Funktionalität einer hierin offenbarten Vorrichtung implizit ein entsprechendes Verfahren offenbaren, welches ausschließlich durch die offenbarte Funktionalität definiert ist. Umgekehrt kann gemäß einer Ausführungsform ein hierin offenbartes Verfahren mit jeder geeigneten bekannten Vorrichtung (die ein einziges Element oder mehrere zusammenwirkende Elemente aufweisen kann) ausgeführt werden. Insofern soll jedes hierin offenbarte Verfahren implizit eine entsprechende Vorrichtung offenbaren, welche konfiguriert ist, um das Verfahren auszuführen.

Es wird darauf hingewiesen, dass, solange nicht ausdrücklich etwas anderes angegeben ist, Zahlwörter (erste, zweite, dritte usw.) lediglich zur Identifizierung von verschiedenen Elementen (beispielsweise Schädigungslinien) dienen, ohne dass die Zahlwörter eine Reihenfolge von Verfahrensschritten implizieren und ohne dass die Zahlwörter eine Existenz von einem der anderen verschiedenen Elemente erfordern oder implizieren. Beispielsweise erfordert allein eine Bezugnahme auf eine zweite Schädigungslinie nicht, dass eine erste Schädigungslinie vor der zweiten Schädigungslinie erzeugt wird. Ferner erfordert eine Bezugnahme auf eine zweite Schädigungslinie nicht, dass eine erste Schädigungslinie bereits vorhanden oder überhaupt vorgesehen ist.

Solange nicht ausdrücklich etwas anderes angegeben ist, definiert gemäß einer Ausführungsform eine Auflistung von Merkmalen oder Verfahrensschritten noch keine Reihenfolge der Merkmale oder der Verfahrensschritte in der Abfolge der Auflistung.

Gemäß einer Ausführungsform umfasst eine Schädigungslinie ein Gebiet, in welchem eine Materialstruktur des Werkstücks geändert ist und dadurch eine strukturelle Stabilität des Werkstücks gegenüber der Umgebung reduziert ist. Beispielsweise kann das Werkstück in dem Gebiet der Schädigungslinie strukturell geschädigt sein. Beispielsweise kann das Gebiet der Schädigungslinie mindestes eines von Defekten, Schwächungen, Sollbruchstellen oder Filamenten aufweisen. Gemäß einer Ausführungsform sind Defekte, Schwächungen und Filamente mindestens teilweise innerhalb des Werkstücks angeordnet. Gemäß einer weiteren Ausführungsform sind Sollbruchstellen an einer Oberfläche des Werksstücks angeordnet.

Gemäß einer Ausführungsform kann das Gebiet, in welchem die Materialstruktur des Werkstücks verändert ist, ein kontinuierliches Gebiet sein, d.h. ein Gebiet, welches sich kontinuierlich entlang der Schädigungslinie erstreckt. Beispielsweise kann das Gebiet eine kontinuierliche Sollbruchstelle aufweisen, beispielsweise in Form eines Risses in einer Oberfläche des Werkstücks. Eine Sollbruchstelle in Form eines Risses kann beispielsweise mit einem Glasschneider hergestellt werden.

Gemäß einer weiteren Ausführungsform erstreckt sich das Gebiet, in welchem die Materialstruktur des Werkstücks verändert ist, abschnittsweise entlang der Schädigungslinie. Gemäß einer weiteren Ausführungsform kann die Veränderung der Materialstruktur des Werkstücks Filamente umfassen, die mit einem Laserstrahl (beispielsweise einem selbstfokussierenden Laserstrahl) in dem Werkstück erzeugt wurden, beispielsweise wie dies in der DE 20 2021 106 275 U1 beschrieben ist. Gemäß einer Ausführungsform sind die Filamente der Vielzahl von Filamenten entlang einer Linie angeordnet (daher wird auch die Vielzahl von Filamenten als Schädigungslinie bezeichnet).

Gemäß einer Ausführungsform ist die gewünschte Konturlinie eine ringförmig geschlossene Konturlinie. Mit anderen Worten kann ein Trennprozess gemäß hierin offenbarten Ausführungsformen ein sogenanntes Innenkontur-Schneiden sein. Gemäß einer Ausführungsform definiert die ringförmig geschlossene Konturlinie ein Loch in dem Werkstück. Gemäß einer Ausführungsform kann die ringförmig geschlossene Konturlinie kreisförmig sein.

Wie vorstehend erläutert, kann die erste Schädigungslinie mit Abstand von der gewünschten Konturlinie angeordnet sein. Im Falle einer ringförmig geschlossen Konturlinie befindet sich die erste Schädigungslinie daher gemäß einer Ausführungsform radial innerhalb der gewünschten Konturlinie. Der Teil des Werkstücks, der sich zwischen der gewünschten Konturlinie und der ersten Schädigungslinie befindet, kann daher gemäß einer Ausführungsform auch als Schutzring bezeichnet werden.

Wie vorstehend bereits erläutert, ist gemäß einer Ausführungsform der erste Teil des Werkstücks ein unerwünschter Teil des Werkstücks, während der nach dem Entfernen des ersten Teils verbleibende Teil des Werkstücks ein gewünschtes Produkt oder Zwischenprodukt sein kann.

Gemäß einer Ausführungsform weist das Verfahren ein Trennen des Werkstücks entlang der ersten Schädigungslinie auf, wobei das Entfernen des ersten Teils des Werkstücks nach dem Trennen des Werkstücks entlang der ersten Schädigungslinie erfolgt. Beispielsweise kann die Trennvorrichtung eine Hilfsvorrichtung aufweisen, die konfiguriert ist zum Trennen des Werkstücks entlang der ersten Schädigungslinie.

Gemäß einer weiteren Ausführungsform kann das Werkstück und/oder die erste Schädigungslinie konfiguriert sein, so dass nach mindestens teilweiser Fertigstellung der ersten Schädigungslinie ein Trennen des Werkstücks entlang der ersten Schädigungslinie automatisch (d. h. von selbst bzw. ohne weitere äußere Einwirkung) erfolgt. Beispielsweise kann mit dem Trennen des Werkstücks entlang der ersten Schädigungslinie automatisch das Entfernen des ersten Teils des Werkstücks erfolgen. Beispielsweise kann das Werkstück so angeordnet sein (beispielsweise gelagert und bezüglich der Richtung der Schwerkraft orientiert sein), dass die auf den ersten Teil wirkende Schwerkraft zu der Trennung und/oder dem Entfernen des ersten Teils führt. Ferner kann beispielsweise die erste Schädigungslinie konfiguriert sein (beispielsweise in ihrer Orientierung bezüglich der Richtung der Schwerkraft), so dass eine auf den ersten Teil wirkende Gewichtskraft zu der Trennung und/oder dem Entfernen des ersten Teils führt. Hinsichtlich der Begriffe Schwerkraft und Gewichtskraft wird angemerkt, dass in üblicher Weise der Begriff Schwerkraft allgemein eine Gravitationskraft bzw. das Schwerefeld der Erde bezeichnet, während der Begriff Gewichtskraft die auf eine konkrete Masse (beispielsweise einen Teil des Werkstücks) wirkende Gravitationskraft bezeichnet.

Gemäß einer Ausführungsform weist das Entfernen des ersten Teils ein Erzeugen von mindestens einer zweiten Schädigungslinie in dem ersten Teil des Werkstücks auf, und ein Trennen des ersten Teils des Werkstücks entlang der mindestens einen zweiten Schädigungslinie. Durch die mindestens eine zweite Schädigungslinie in dem ersten Teil und das Trennen des ersten Teils entlang der mindestens einen zweiten Schädigungslinie kann ein Entfernen des ersten Teils des Werkstücks erleichtert werden. Falls beispielsweise die erste Schädigungslinie eine Geometrie aufweist, die ein automatisches oder leichtes Entfernen des ersten Teils nicht erlaubt, kann gemäß einer Ausführungsform durch die zweite Schädigungslinie eine bessere Geometrie zum Entfernen von Teilen des ersten Teils erzielt werden.

Gemäß einer Ausführungsform ist die Steuervorrichtung konfiguriert, um nach dem Trennen des Werkstücks entlang der ersten Schädigungslinie das Entfernen des ersten Teils des Werkstücks zu bewirken.

Gemäß einer Ausführungsform erstreckt sich die mindestens eine zweite Schädigungslinie in einer Richtung von der ersten Schädigungslinie weg. Beispielsweise erstreckt sich gemäß einer Ausführungsform die mindestens eine zweite Schädigungslinie in einer Richtung von der ersten Schädigungslinie hin zu einem Zentrum des ersten Teils. Eine solche Ausführungsform kann insbesondere im Fall einer ringförmig geschlossenen ersten Schädigungslinie ein Trennen und ein Entfernen des ersten Teils vereinfachen.

Gemäß einer Ausführungsform weist das Verfahren ein Erzeugen einer dritten Schädigungslinie entlang der gewünschten Konturlinie und ein Trennen des Werkstücks entlang der dritten Schädigungslinie auf. Gemäß einer weiteren Ausführungsform umfasst das Verfahren ein Trennen des Werkstücks entlang der dritten Schädigungslinie (d. h. entlang der gewünschten Konturlinie). Das Trennen des Werkstücks entlang der dritten Schädigungslinie kann gemäß einer Ausführungsform automatisch erfolgen durch geeignete Konfiguration von mindestens einem von einer Lagerung des Werkstücks, der Schädigungslinie und einer Anordnung des Werkstücks bezüglich der Richtung der Schwerkraft. Gemäß einer weiteren Ausführungsform kann das Trennen des Werkstücks entlang der dritten Schädigungslinie durch eine geeignete Hilfsvorrichtung erfolgen (beispielsweise durch dieselbe Hilfsvorrichtung, die gemäß einer Ausführungsform zum Trennen des Werkstücks entlang der ersten Schädigungslinie vorgesehen ist, oder durch eine weitere Hilfsvorrichtung). Im Rahmen der vorliegenden Offenbarung wird eine Hilfsvorrichtung zum Trennen des Werkstücks entlang der ersten Schädigungslinie auch als erste Hilfsvorrichtung bezeichnet und eine Hilfsvorrichtung zum Trennen des Werkstücks entlang der dritten Schädigungslinie wird auch als zweite Hilfsvorrichtung bezeichnet. Gemäß einer Ausführungsform können die erste Hilfsvorrichtung und die zweite Hilfsvorrichtung separate Hilfsvorrichtungen sein. Gemäß einer weiteren Ausführungsform können die erste Hilfsvorrichtung und die zweite Hilfsvorrichtung durch eine einzige Hilfsvorrichtung gebildet sein.

An dieser Stelle sei nochmals darauf hingewiesen, dass in dieser Offenbarung Zahlwörter (jedenfalls in einer Ausführungsform) keinen Hinweis auf eine Reihenfolge von Verfahrensschritten liefern. Beispielsweise erfolgt gemäß einer Ausführungsform das Erzeugen der dritten Schädigungslinie zeitlich vor dem Erzeugen der ersten Schädigungslinie. Gemäß einer vorteilhaften Ausführungsform ist folgende Reihenfolge gegeben:
1) Erzeugen der dritten Schädigungslinie
2) Erzeugen der ersten Schädigungslinie
3) Trennen des Werkstücks entlang der ersten Schädigungslinie
4) Trennen des Werkstücks entlang der dritten Schädigungslinie

Das Erzeugen der dritten Schädigungslinie vor der ersten Schädigungslinie hat den Vorteil, dass selbst voranlaufende Risse, die bei der Erzeugung der ersten Schädigungslinie entstehen können, an der dritten Schädigungslinie durch ein automatisches (von selbst ablaufendes) Trennen entlang der dritten Schädigungslinie gestoppt werden können.

Gemäß einer Ausführungsform umfasst das Verfahren ein Entfernen eines zweiten Teils des Werkstücks, welcher zwischen der dritten Schädigungslinie und der ersten Schädigungslinie angeordnet ist.

Gemäß einer Ausführungsform weist das Entfernen des zweiten Teils des Werkstücks ein Erzeugen von mindestens einer vierten Schädigungslinie in dem zweiten Teil des Werkstücks auf. Gemäß einer Ausführungsform erstreckt sich die mindestens eine vierte Schädigungslinie in einer Richtung von der dritten Schädigungslinie weg. Beispielsweise erstreckt sich gemäß einer Ausführungsform die mindestens eine vierte Schädigungslinie zwischen der ersten Schädigungslinie und der dritten Schädigungslinie. Auf diese Weise kann gemäß einer Ausführungsform das Entfernen des zweiten Teils des Werkstücks erleichtert werden.

Gemäß einer Ausführungsform umfasst die mindestens eine vierte Schädigungslinie eine fünfte Schädigungslinie und eine sechste Schädigungslinie, wobei die fünfte Schädigungslinie und die sechste Schädigungslinie geformt und angeordnet sind, so dass der zweite Teil des Werkstücks einen Werkstückabschnitt, welcher zwischen der fünften Schädigungslinie und der sechsten Schädigungslinie angeordnet ist, nach der Trennung des Werkstücks entlang der fünften Schädigungslinie und der sechsten Schädigungslinie in einer Richtung von der dritten Schädigungslinie weg freigibt. Beispielsweise können gemäß einer Ausführungsform die fünfte Schädigungslinie und die sechste Schädigungslinie in Richtung zu der dritten Schädigungslinie hin aufeinander zu laufen. Der Werkstückabschnitt zwischen der fünften Schädigungslinie und der sechsten Schädigungslinie kann auf diese Weise eine Keilform aufweisen. Auf diese Weise kann gemäß einer Ausführungsform das Entfernen des Werkstückabschnitts zwischen der fünften Schädigungslinie und der sechsten Schädigungslinie erleichtert werden.

Gemäß einer weiteren Ausführungsform erfolgt das Trennen des Werkstücks entlang der ersten Schädigungslinie durch einen ersten Trennmechanismus und ein Trennen entlang der dritten Schädigungslinie erfolgt durch einen zweiten Trennmechanismus, der verschieden ist von dem ersten Trennmechanismus. Ein anderer Trennmechanismus für das Trennen der ersten Schädigungslinie (d. h. ein Trennmechanismus, der unabhängig ist von Trennmechanismen anderer Schädigungslinien, insbesondere vom Trennmechanismus für die dritte Schädigungslinie) erlaubt eine spezifische Optimierung der Trennung entlang der ersten Schädigungslinie. Beispielsweise kann das Trennen entlang der ersten Schädigungslinie durch einen kostengünstigen und unpräzisen Trennprozess erfolgen. Durch das Trennen entlang der ersten Schädigungslinie und Entfernen des ersten Teils des Werkstücks wird gemäß einer Ausführungsform bereits ein Großteil des zu entfernenden Materials (des unerwünschten Materials) entfernt.

Ein schützender Teil des Werkstücks zwischen der ersten Schädigungslinie und der dritten Schädigungslinie verhindert, dass bei dem Entfernen des ersten Teils des Werkstücks und/oder beim Trennen der ersten Schädigungslinie eine Qualität der Trennung entlang der dritten Schädigungslinie leidet. Gemäß einer Ausführungsform kann die Trennung entlang der dritten Schädigungslinie durch mittels laserinduzierte (d.h. thermisch induzierte) mechanische Spannungen erfolgen (beispielsweise durch Bestrahlung der dritten Schädigungslinie mit einem CO2-Laser).

Gemäß einer Ausführungsform umfasst der erste Trennmechanismus und der zweite Trennmechanismus ein Erzeugen einer mechanischen Spannung, beispielsweise durch mindestens eines von dem folgenden: (i) eine mechanische Krafteinwirkung; (ii) ein Induzieren von mindestens einem Teil der mechanischen Spannung, beispielsweise ein thermisches Induzieren von mindestens einem Teil der mechanischen Spannung, beispielsweise mittels Laserstrahlung. Beispielsweise kann die erste Hilfsvorrichtung und/oder die zweite Hilfsvorrichtung konfiguriert sein, um einen Temperaturgradienten an der betreffenden Schädigungslinie (beispielsweise der ersten Schädigungslinie oder der dritten Schädigungslinie) zu erzeugen und dadurch das Werkstück entlang der Schädigungslinie durch eine mechanische Spannung, die durch den Temperaturgradienten thermisch induziert ist, zu trennen.

Gemäß einer Ausführungsform ist die mechanische Krafteinwirkung eine Wirkung einer Gewichtskraft, beispielsweise einer Gewichtskraft des ersten Teils oder einer Gewichtskraft des schützenden Teils (das Teils des Werkstücks, der zwischen der ersten Schädigungslinie und der dritten Schädigungslinie liegt bzw. durch die erste Schädigungslinie und die dritte Schädigungslinie definiert ist.

Gemäß einer Ausführungsform umfasst der Trennmechanismus einer mechanischen Krafteinwirkung eine Ausgestaltung der betreffenden Schädigungslinie derart, dass die mechanische Krafteinwirkung ausreicht, um die Trennung zu bewirken. Beispielsweise ist gemäß einer Ausführungsform die betreffende Schädigungslinie derart konfiguriert, dass die Gewichtskraft ausreicht, um die Trennung zu bewirken. Beispielsweise ist gemäß einer Ausführungsform die erste Schädigungslinie konfiguriert, so dass die Gewichtskraft des ersten Teils ausreicht, um die Trennung zu bewirken.

Gemäß einer Ausführungsform umfasst eine Konfiguration (bzw. ein Konfigurieren) einer Schädigungslinie (beispielsweise der ersten Schädigungslinie, der zweiten Schädigungslinie, der dritten Schädigungslinie, der vierten Schädigungslinie, der fünften Schädigungslinie oder der sechsten Schädigungslinie) eine Orientierung der Schädigungslinie relativ zu mindestens einer Oberfläche des Werkstücks und/oder eine Orientierung des Werkstücks relativ zu der Richtung der Schwerkraft/Gewichtskraft. Eine solche Konfiguration der Schädigungslinie ist insbesondere dann vorteilhaft, wenn sich die Schädigungslinie mindestens teilweise innerhalb des Werkstücks erstreckt. Gemäß einer weiteren Ausführungsform umfasst eine Konfiguration (bzw. ein Konfigurieren) der Schädigungslinie eine Ausgestaltung der Schädigungslinie (beispielsweise die Ausgestaltung mindestens einer mechanischen Eigenschaft des Werkstücks in dem Gebiet der Schädigungslinie).

Gemäß einer Ausführungsform ist die mechanische Spannung thermisch induziert (beispielsweise wie bereits erläutert) oder durch eine Schädigung des Werkstücks induziert. Eine durch Schädigung des Werkstücks induzierte mechanische Spannung kann beispielsweise eine mechanische Spannung sein, die durch eine Schädigungslinie (beispielsweise durch Defekte, Schwächungen, Sollbruchstellen oder Filamente im Gebiet der Schädigungslinie) induziert ist. Beispielsweise kann gemäß einer Ausführungsform die Schädigungslinie derart erzeugt werden, dass eine durch die Schädigungslinie induzierte mechanische Spannung allein oder, gemäß anderer Ausführungsform, zusammen mit der mechanischen Krafteinwirkung, eine Trennung entlang der Schädigungslinie bewirkt. Beispielsweise kann gemäß einer Ausführungsform die erste Schädigungslinie derart erzeugt werden, dass eine durch die erste Schädigungslinie induzierte mechanische Spannung zusammen mit der Gewichtskraft des ersten Teils bei geeigneter Orientierung des Werkstücks zu einem automatischen Trennen entlang der ersten Schädigungslinie und zu einem automatischen Entfernen des ersten Teils führt.

Gemäß Ausführungsformen des ersten Aspektes ist das Verfahren konfiguriert zum Liefern der Funktionalität von einem oder mehreren der hierin offenbarten Ausführungsformen und/oder zum Liefern der Funktionalität, wie sie erforderlich ist für eine oder mehrere der hierin offenbarten Ausführungsformen, insbesondere der Ausführungsformen des ersten Aspektes und/oder des zweiten Aspektes.

Gemäß Ausführungsformen des zweiten Aspektes ist die Trennvorrichtung konfiguriert zum Liefern der Funktionalität von einem oder mehreren der hierin offenbarten Ausführungsformen und/oder zum Liefern der Funktionalität, wie sie erforderlich ist für eine oder mehrere der hierin offenbarten Ausführungsformen, insbesondere der Ausführungsformen des ersten Aspektes und/oder des zweiten Aspektes.

Weitere Vorteile und Merkmale der vorliegenden Offenbarung ergeben sich aus der folgenden beispielhaften Beschreibung von beispielhaften Implementierungen derzeit bevorzugter Ausführungsformen, auf welche die beanspruchte Erfindung jedoch nicht beschränkt ist. Die einzelnen Figuren der Zeichnungen dieses Dokuments sind lediglich als schematisch und als nicht maßstabsgetreu anzusehen.

### KURZE BESCHREIBUNG DER ZEICHNUNGEN

Fig. 1 zeigt ein Werkstück gemäß Ausführungsformen der hierin offenbarten Gegenstände. Ferner wird mit Bezug auf das Werkstück ein Verfahren gemäß Ausführungsformen der hierin offenbarten Gegenstände beschrieben.
Fig. 2 zeigt eine Trennvorrichtung gemäß Ausführungsformen der hierin offenbarten Gegenstände.

### DETAILLIERTE BESCHREIBUNG

Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer unterscheiden. Solche Merkmale bzw. Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt.

Es versteht sich, dass eine beispielhafte Implementierung der nachfolgend beschriebenen und mit Bezugszeichen versehenen Elemente in den betreffenden Zeichnungen dargestellt und gemäß der nachfolgenden Beschreibung konfiguriert sind, sofern nicht etwas anderes angegeben ist.

Ferner ist zu beachten, dass Ausführungsformen, welche im Zusammenhang mit einer beispielhaften Implementierung (d.h. einer beispielhaften Kombination von Ausführungsformen) mit Bezug eine bestimmte Zeichnung beschrieben werden, nicht auf diese Implementierung beschränkt sind. Vielmehr sind, wie bereits oben erläutert, die hierin beschriebenen Ausführungsformen beliebig kombinierbar. Somit sind auch Ausführungsformen, die mit Bezug auf verschiedene Implementierungen in verschiedenen Zeichnungen beschrieben werden, miteinander kombinierbar.

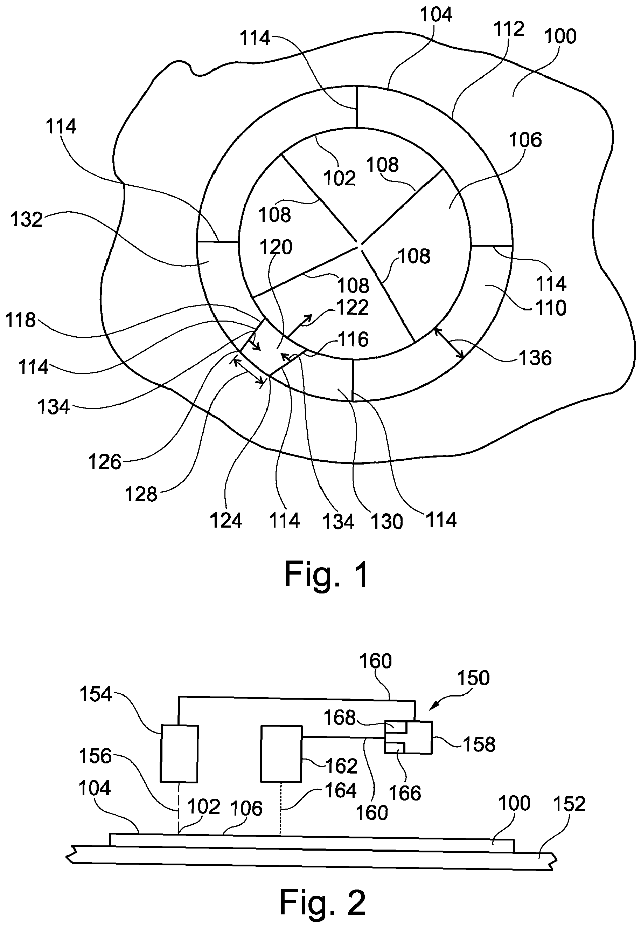

Fig. 1 zeigt ein Werkstück 100 gemäß Ausführungsformen der hierin offenbarten Gegenstände. Ferner wird mit Bezug auf das Werkstück 100 ein Verfahren gemäß Ausführungsformen der hierin offenbarten Gegenstände beschrieben. Gemäß einer Ausführungsform ist das Werkstück 100 aus Glas gefertigt. Beispielsweise ist gemäß einer Ausführungsform das Werkstück 100 eine Glasplatte.

Gemäß einer Ausführungsform wird eine Schädigungslinie 112 (hierin auch als dritte Schädigungslinie bezeichnet) entlang einer gewünschten Konturlinie 104 erzeugt. Gemäß einer Ausführungsform wird in dem Werkstück 100 danach eine Schädigungslinie 102 (hierein auch als erste Schädigungslinie bezeichnet) erzeugt, die mit Abstand von der gewünschten Konturlinie 104 angeordnet ist. Gemäß einer Ausführungsform ist die erste Schädigungslinie 102 ringförmig geschlossen, beispielsweise wie in Fig. 1 dargestellt. Die erste Schädigungslinie 102 definiert gemäß einer Ausführungsform einen ersten Teil 106 des Werkstücks 104. Gemäß einer Ausführungsform wird in dem ersten Teil 106 des Werkstücks 100 mindestens eine Schädigungslinie 108 (hierin auch als zweite Schädigungsline bezeichnet) erzeugt. Beispielsweise werden gemäß einer Ausführungsform mindestens drei zweite Schädigungslinien 108, beispielsweise vier zweite Schädigungslinien 108 in dem ersten Teil 106 erzeugt. Gemäß einer Ausführungsform erstreckt sich die mindestens eine zweite Schädigungslinie 108 quer zu der ersten Schädigungslinie 102, beispielsweise wie in Fig. 1 dargestellt.

Gemäß einer Ausführungsform wird der erste Teil 106 des Werkstücks 100 entfernt durch Trennen des Werkstücks 100 entlang der ersten Schädigungslinie 102 und entlang der mindestens einen zweiten Schädigungslinie 108. Gemäß einer Ausführungsform (beispielswiese im Fall einer ringförmig geschlossenen Schädigungslinie 102) wird durch Entfernen des ersten Teils 106 wird in dem Werkstück 100 ein Loch erzeugt, dessen Umfangsrand durch die erste Schädigungslinie 102 definiert ist.

Da zwischen der ersten Schädigungslinie 102 und der gewünschten Konturlinie 104 ein schützender Teil 110 (hierin auch als zweiter Teil 110 bezeichnet) des Werkstücks 100 verbleibt, kann das Entfernen des ersten Teils 106 mit geringerer Präzision ausgeführt werden, was die Kosten senkt und/oder eine raschere Bearbeitung erlaubt. Gemäß einer Ausführungsform ist der zweite Teil 110 ringförmig ausgebildet, beispielsweise wie in Fig. 1 dargestellt. Gemäß einer Ausführungsform ist die Breite des zweiten Teils 110 (d. h. ein Abstand 136 zwischen der ersten Schädigungslinie 102 und der gewünschten Konturlinie 104) entlang der gewünschten Konturlinie 104 konstant, beispielsweise wie in Fig. 1 dargestellt.

Zum Entfernen des zweiten Teils 110 wird gemäß einer Ausführungsform mindestens eine Schädigungslinie 114 (hierin auch als vierte Schädigungslinie bezeichnet) in dem zweiten Teil 110 des Werkstücks 100 erzeugt. Gemäß einer Ausführungsform werden mindestens drei vierte Schädigungslinien 114, beispielsweise vier oder sechs vierte Schädigungslinien 114 erzeugt, beispielsweise wie in Fig. 1 dargestellt. Gemäß einer Ausführungsform erstreckt sich die mindestens eine vierte Schädigungslinie 114 quer zu der gewünschten Konturlinie 104, beispielsweise wie in Fig. 1 dargestellt.

Gemäß einer Ausführungsform umfasst die mindestens eine vierte Schädigungslinie 114 eine Schädigungslinie 116 (hierin auch als fünfte Schädigungslinie bezeichnet) und eine Schädigungslinie 118 (hierin auch als sechste Schädigungslinie bezeichnet). Die fünfte Schädigungslinie 116 und die sechste Schädigungslinie 118 definieren zwischen sich einen Werkstückabschnitt 120, d. h. der Werkstückabschnitt 120 des zweiten Teils 110 ist zwischen der fünften Schädigungslinie 116 und der sechsten Schädigungslinie 118 angeordnet, beispielsweise wie in Fig. 1 dargestellt.

Gemäß einer Ausführungsform ist die fünfte Schädigungslinie 116 und die sechste Schädigungslinie 118 geformt und angeordnet, so dass der zweite Teil 110 den Werkstückabschnitt 120 nach der Trennung der dritten Schädigungslinie 112, der Trennung der fünften Schädigungslinie 116 und der Trennung der sechsten Schädigungslinie 118 in einer Richtung 122 von der dritten Schädigungslinie 112 weg freigibt. Gemäß einer Ausführungsform münden die fünfte Schädigungslinie 116 und die sechste Schädigungslinie 118 in die dritte Schädigungslinie 112, beispielsweise wie in Fig. 1 dargestellt. Gemäß einer weiteren Ausführungsform (nicht dargestellt) enden die fünfte Schädigungslinie 116 und die sechste Schädigungslinie 118 mit Abstand zu der dritten Schädigungslinie 112. Ein auf diese Weise vorliegender Abstand der fünften Schädigungslinie 116 und der sechsten Schädigungslinie 118 von der dritten Schädigungslinie 112 ist gemäß einer Ausführungsform so bemessen, dass der zweite Teil 110 den Werkstückabschnitt 120 wie vorstehend beschrieben freigibt (nach Trennung der Schädigungslinien 112, 116, 118).

Gemäß einer Ausführungsform verlaufen die fünfte Schädigungslinie 116 und die sechste Schädigungslinie 118 in einer Richtung von der gewünschten Konturlinie 104 weg und auch voneinander weg, beispielsweise wie in Fig. 1 dargestellt, so dass eine Bewegung des Werkstückabschnitts 120 in der Richtung 122 von der dritten Schädigungslinie 112 weg dazu führt, dass der Werkstückabschnitt 120 mit seitlichem Spiel von dem verbleibenden Rest des zweiten Teils 110 vorliegt und dadurch auf einfache Weise entfernbar ist.

Gemäß einer Ausführungsform sind ein Ende 124 der fünften Schädigungslinie 116, welches benachbart zu der dritten Schädigungslinie 112 angeordnet ist, und ein Ende 126 der sechsten Schädigungslinie 118, welches benachbart zu der dritten Schädigungslinie 112 angeordnet ist, voneinander beanstandet, beispielsweise um einen Abstand 128, beispielsweise wie in Fig. 1 dargestellt. Auf diese Weise können benachbarte Werkstückabschnitte 130, 132 des zweiten Teils 110, zwischen denen der Werkstückabschnitt 120 angeordnet war, nach dem Entfernen des Werkstückabschnitts 120 aufeinander zu bewegt werden (können sich aufeinander zu bewegen), beispielsweise wie in Fig. 1 bei 134 angegeben. Auf diese Weise können die verbleibenden Abschnitte des zweiten Teils 110 (einschließlich der Werkstückabschnitte 130, 132) auf einfache Weise entfernt werden.

Gemäß einer Ausführungsform hat der zweite Teil 110 in einer Richtung senkrecht zu der gewünschten Konturlinie eine Breite 136. Gemäß einer Ausführungsform liegt die Breite 136 in einem Bereich zwischen 0,5 mm und 10 cm, beispielsweise zwischen 1 mm und 5 cm. Gemäß einer Ausführungsform wird die Breite 136 derart gewählt, dass ein ausreichender Schutz des Werkstücks 100 im Bereich der gewünschten Konturlinie 104 gegeben ist und dennoch eine einfache und effiziente Entfernung des schützenden Teils (d. h. des zweiten Teils) 110 des Werkstücks mit hoher Qualität möglich ist.

Fig. 2 zeigt eine Trennvorrichtung 150 gemäß Ausführungsformen der hierin offenbarten Gegenstände. Gemäß einer Ausführungsform weist die Trennvorrichtung 150 eine Aufnahme 152 zum Aufnehmen des Werkstücks 100 auf. Beispielsweise kann die Aufnahme 152 durch ein Förderband gebildet sein. Gemäß einer Ausführungsform weist die Trennvorrichtung 150 eine erste Laservorrichtung 154 auf zum Abgeben einer ersten Laserstrahlung 156. Ferner weist die Trennvorrichtung 150 eine Steuervorrichtung 158 auf, welche konfiguriert ist zum Steuern der ersten Laservorrichtung 154. Gemäß einer Ausführungsform ist die Steuervorrichtung 158 hierzu mit der ersten Laservorrichtung 154 steuerungsmäßig verbunden, wie beispielsweise in Fig. 2 bei 160 angegeben.

Gemäß einer Ausführungsform ist die Steuervorrichtung 158 konfiguriert zum Steuern der ersten Laservorrichtung 154 und dadurch Erzeugen der ersten Schädigungslinie 102, beispielsweise wie in Fig. 2 dargestellt. Gemäß einer Ausführungsform ist die Steuervorrichtung 158 konfiguriert, um ein Entfernen des ersten Teils 106 des Werkstücks 100 zu bewirken. Gemäß einer Ausführungsform weist die Trennvorrichtung 150 hierzu eine Hilfsvorrichtung 162 auf, beispielsweise in Form einer zweiten Laservorrichtung, welche konfiguriert ist zum Abgeben einer zweiten Laserstrahlung 164, beispielsweise wie in Fig. 2 dargestellt. Gemäß einer Ausführungsform wird die zweite Hilfsvorrichtung 162 über eine steuerungsmäßige Verbindung 160 von der Steuervorrichtung 158 gesteuert.

Gemäß einer Ausführungsform wird die erste Schädigungslinie 102 durch geeignetes Positionieren des Werkstücks 100 (beispielsweise durch die Aufnahme 152) im Bearbeitungsbereich der zweiten Laservorrichtung 162 positioniert und mit der zweiten Laserstrahlung 164 beaufschlagt, um das Werkstück 100 im Bereich der ersten Schädigungslinie 102 zu trennen (in Fig. 2 nicht dargestellt).

Es versteht sich, dass jeder hierin beschriebene Trennvorgang auf die vorstehend beschriebene Weise erfolgen kann, nämlich durch Erzeugen einer Schädigungslinie durch Beaufschlagung des Werkstücks mit der ersten Laserstrahlung 156 und anschließendes Trennen des Werkstücks entlang der Schädigungslinie durch Beaufschlagung der Schädigungslinie mit der zweiten Laserstrahlung 164.

Gemäß einer weiteren Ausführungsform kann das Trennen des Werkstücks 100 entlang einer Schädigungslinie durch jeden anderen geeigneten Prozess, beispielsweise mechanisch, durch eine mechanische (äußere) Krafteinwirkung erfolgen.

Gemäß einer Ausführungsform ist die Trennvorrichtung 150 konfiguriert (oder die Steuervorrichtung 158 ist konfiguriert), um eine oder mehrere Schädigungslinien in einer Weise zu erzeugen und/oder das Werkstück 100 so anzuordnen, dass bei einer Trennung des Werkstücks entlang der Schädigungslinie eine Entfernung des abgetrennten Teils (beispielsweise des ersten Teils 106 und/oder des zweiten Teils 110) von selbst erfolgt, beispielsweise durch die Schwerkraft (beispielsweise die Schwerkraft auf den abgetrennten Teil), durch mechanische Spannungen, die durch den Trennprozess erfolgen, etc. Auf diese Weise bewirkt die Steuervorrichtung 158 (durch die Trennung des Werkstücks entlang der Schädigungslinie) ein Entfernen des abgetrennten Teils.

Gemäß einer weiteren Ausführungsform kann eine weitere Hilfsvorrichtung vorgesehen sein (in Fig. 2 nicht dargestellt), welche beispielsweise eine mechanische Kraft auf den zu entfernenden Teil (beispielsweise den ersten Teil 106 und/oder den zweiten Teil 110) ausübt, um den zu entfernenden Teil zu entfernen. Gemäß einer Ausführungsform ist die weitere Hilfsvorrichtung und/oder die Hilfsvorrichtung konfiguriert, um den zu entfernenden Teil durch einen Gasstrom und/oder durch Vibrationen zu entfernen. Die Vibrationen können beispielsweise durch mindestens eines von dem Folgenden induziert werden: mechanisch, durch einen piezoelektrischen Effekt, akustisch (zum Beispiel durch Ultraschall). Gemäß einer Ausführungsform ist die weitere Hilfsvorrichtung durch die Steuervorrichtung 158 gesteuert.

Gemäß einer Ausführungsform weist die Steuervorrichtung 158 eine Speichervorrichtung 166 auf, in welcher beispielsweise ein Computerprogramm gespeichert sein kann, welches die Funktionalität der Steuervorrichtung 158 definiert. Gemäß einer weiteren Ausführungsform weist die Steuervorrichtung 158 eine Prozessorvorrichtung 168 auf, welche zum Ausführen des Computerprogramms konfiguriert ist. Gemäß einer Ausführungsform bewirkt das Computerprogramm, wenn es auf der Prozessorvorrichtung 168 ausgeführt wird, die Ausführung eines Verfahrens gemäß einer oder mehreren Ausführungsformen der hierin offenbarten Gegenstände.

Beispielhafte Implementierungen der hierin offenbarten Gegenstände umfassen insbesondere die nachfolgend beschriebenen Ausführungsformen und Kombinationen von Ausführungsformen:
1. Verfahren aufweisend:
   Erzeugen einer ersten Schädigungslinie 102 in einem Werkstück 100, wobei die erste Schädigungslinie 102 mit Abstand von einer gewünschten Konturlinie 104 angeordnet ist und einen ersten Teil 106 des Werkstücks 100 definiert;
   wobei der erste Teil 106 des Werkstücks 100 auf einer der gewünschten Konturlinie 104 abgewandten Seite der ersten Schädigungslinie 102 angeordnet ist und sich von der ersten Schädigungslinie 102 weg erstreckt; und
   Entfernen des ersten Teils 106 des Werkstücks 100.
2. Verfahren nach Ausführungsform 1, ferner aufweisend
   Trennen des Werkstücks 100 entlang der ersten Schädigungslinie 102;
   wobei Entfernen des ersten Teils 106 des Werkstücks 100 nach dem Trennen des Werkstücks 100 entlang der ersten Schädigungslinie 102 erfolgt.
3. Verfahren nach Ausführungsform 1 oder 2, das Entfernen des ersten Teils 106 des Werkstücks 100 aufweisend
   Erzeugen von mindestens einer zweiten Schädigungslinie 108 in dem ersten Teil 106 des Werkstücks 100;
   Trennen des ersten Teils 106 des Werkstücks 100 entlang der mindestens einen zweiten Schädigungslinie 108.
4. Verfahren nach Ausführungsform 3,
   wobei die mindestens eine zweite Schädigungslinie 108 sich in einer Richtung von der ersten Schädigungslinie 102 weg erstreckt.
5. Verfahren nach irgendeinem der Ausführungsformen 1 bis 4, ferner aufweisend
   Erzeugen einer dritten Schädigungslinie 112 entlang der gewünschten Konturlinie 104;
   optional Trennen des Werkstücks 100 entlang der dritten Schädigungslinie 112; und
   optional Entfernen eines zweiten Teils 110 des Werkstücks 100, welcher zwischen der dritten Schädigungslinie 112 und der ersten Schädigungslinie 102 angeordnet ist;
   wobei optional das Erzeugen der dritten Schädigungslinie 112 zeitlich vor dem Erzeugen der ersten Schädigungslinie 102 erfolgt.
6. Verfahren nach Ausführungsform 5, wobei das Entfernen des zweiten Teils 110 des Werkstücks 100 aufweist:
   Erzeugen von mindestens einer vierten Schädigungslinie 114 in dem zweiten Teil 110 des Werkstücks 100;
   wobei die mindestens eine vierte Schädigungslinie 114 sich in einer Richtung von der dritten Schädigungslinie 112 weg erstreckt.
7. Verfahren nach Ausführungsform 6,
   wobei die mindestens eine vierte Schädigungslinie 114 eine fünfte Schädigungslinie 116 und eine sechste Schädigungslinie 118 umfasst; und wobei die fünfte Schädigungslinie 116 und die sechste Schädigungslinie 118 geformt und angeordnet sind, so dass der zweite Teil des Werkstücks 100 einen Werkstückabschnitt 120, welcher zwischen der fünften Schädigungslinie 116 und der sechsten Schädigungslinie 118 angeordnet ist, nach einer Trennung des Werkstücks 100 entlang der fünften Schädigungslinie 116 und der sechsten Schädigungslinie 118 in einer Richtung 122 von der dritten Schädigungslinie 112 weg freigibt.
8. Verfahren nach einer der Ausführungsformen 5 bis 7, wobei das Trennen des Werkstücks 100 entlang der ersten Schädigungslinie 102 durch einen ersten Trennmechanismus erfolgt und ein Trennen entlang der dritten Schädigungslinie 112 durch einen zweiten Trennmechanismus erfolgt, der verschieden ist von dem ersten Trennmechanismus;
   wobei optional der erste Trennmechanismus und der zweite Trennmechanismus ein Erzeugen einer mechanischen Spannung in dem Werkstück 100 umfasst;
   wobei optional das Erzeugen einer mechanischen Spannung in dem Werkstück 100 durch mindestens eines von dem folgenden erfolgt:
      eine mechanische Krafteinwirkung;
      ein Induzieren einer von mindestens einem Teil der mechanischem Spannung, beispielsweise ein thermisches Induzieren von mindestens einem Teil der mechanischen Spannung.

Es sollte angemerkt werden, dass ein Teil oder ein Abschnitt eines Werkstücks, wie er hierin beschrieben ist, nicht auf die dezidierten Entitäten beschränkt ist, wie sie in einigen Ausführungsformen beschrieben sind. Vielmehr können die hierin offenbarten Gegenstände auf zahlreichen Weisen implementiert werden, während sie immer noch die offenbarte spezifische Funktionalität liefern.

Gemäß einer Ausführungsform enthält die Steuervorrichtung eine Prozessorvorrichtung, welche mindestens einen Prozessor aufweist zum Ausführen von mindestens einem Programmelement eines Computerprogramms, welches einem entsprechenden Softwaremodul entsprechen kann.

Eine Bezugnahme auf eine Laserstrahlung kann selbstverständlich auch analog definiert werden unter Bezugnahme auf einen Strahlungsweg der Laserstrahlung, und umgekehrt. Insofern offenbart hierin jede Bezugnahme auf eine Laserstrahlung analog eine Bezugnahme auf einen Strahlungsweg der Laserstrahlung.

Es wird darauf hingewiesen, dass die hierin beschriebenen beispielhaften Implementierungen lediglich eine beschränkte Auswahl an möglichen Kombinationen von Ausführungsformen der vorliegenden Offenbarung darstellen. So ist es möglich, die Merkmale verschiedener Ausführungsformen in geeigneter Weise miteinander zu kombinieren, so dass für den Fachmann mit den hier explizit offenbarten beispielhaften Implementierungen eine Vielzahl von Kombinationen verschiedener Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus. Folglich steht gemäß einer Ausführungsform der Begriff "aufweisend" oder "enthaltend" für "unter anderem aufweisend". Gemäß einer weiteren Ausführungsform steht der Begriff "aufweisend" oder "enthaltend" für "bestehend aus". Gemäß einer Ausführungsform umfasst der Begriff "konfiguriert für" unter anderem die Bedeutung "konfiguriert, um".

Es sollte auch angemerkt werden, dass Bezugszeichen in den Ansprüchen nicht als den Umfang der Ansprüche einschränkend ausgelegt werden sollten. Ferner sollte angemerkt werden, dass Bezugszeichen in der Beschreibung und die Bezugnahme der Beschreibung auf die Zeichnungen nicht als den Umfang der Beschreibung einschränkend ausgelegt werden sollen. Vielmehr veranschaulichen die Zeichnungen nur eine exemplarische Implementierung einer bestimmten Kombination von mehreren Ausführungsformen der hierin offenbarten Gegenstände, wobei jede andere Kombination von Ausführungsformen ebenso möglich und mit dieser Anmeldung als offenbart anzusehen ist.

Zusammenfassend bleibt festzustellen:
Beschrieben wird ein Verfahren aufweisend: Erzeugen einer ersten Schädigungslinie in einem Werkstück, wobei die erste Schädigungslinie mit Abstand von einer gewünschten Konturlinie angeordnet ist und einen ersten Teil des Werkstücks definiert; wobei der erste Teil des Werkstücks auf einer der gewünschten Konturlinie abgewandten Seite der ersten Schädigungslinie angeordnet ist und sich von der ersten Schädigungslinie weg erstreckt; und Entfernen des ersten Teils des Werkstücks. Ferner wird eine entsprechende Trennvorrichtung beschrieben.

## Patentansprüche

1. Trennvorrichtung (150) aufweisend:
eine erste Laservorrichtung (154) zum Abgeben einer ersten Laserstrahlung (156);
eine Steuervorrichtung (158), welche konfiguriert ist zum Steuern der ersten Laservorrichtung (154) und dadurch Erzeugen einer ersten Schädigungslinie (102) in einem Werkstück (100) mit der ersten Laserstrahlung (156), wobei die erste Schädigungslinie (102) mit Abstand (136) von einer gewünschten Konturlinie (104) angeordnet ist und einen ersten Teil (106) des Werkstücks (100) definiert;
wobei der erste Teil (106) des Werkstücks (100) auf einer der gewünschten Konturlinie (104) abgewandten Seite der ersten Schädigungslinie (102) angeordnet ist und sich von der ersten Schädigungslinie (102) weg erstreckt;
wobei die Steuervorrichtung (158) konfiguriert ist, um ein Entfernen des ersten Teils (106) des Werkstücks (100) zu bewirken.

2. Trennvorrichtung nach Anspruch 1, ferner aufweisend
eine Hilfsvorrichtung (162), die konfiguriert ist zum Trennen des Werkstücks (100) entlang der ersten Schädigungslinie (102);
wobei optional die Steuervorrichtung (158) konfiguriert ist, um nach dem Trennen des Werkstücks (100) entlang der ersten Schädigungslinie (102) das Entfernen des ersten Teils (106) des Werkstücks (100) zu bewirken.

3. Trennvorrichtung nach Anspruch 1 oder 2, das Entfernen des ersten Teils (106) des Werkstücks (100) aufweisend
Erzeugen von mindestens einer zweiten Schädigungslinie (108) in dem ersten Teil (106) des Werkstücks (100);
Trennen des ersten Teils (106) des Werkstücks (100) entlang der mindestens einen zweiten Schädigungslinie (108).

4. Trennvorrichtung nach Anspruch 3,
wobei die mindestens eine zweite Schädigungslinie (108) sich in einer Richtung von der ersten Schädigungslinie (102) weg erstreckt.

5. Trennvorrichtung nach irgendeinem der Ansprüche 1 bis 4, wobei die Steuervorrichtung konfiguriert ist, zum
Erzeugen einer dritten Schädigungslinie (112) entlang der gewünschten Konturlinie (104);
optional Trennen des Werkstücks (100) entlang der dritten Schädigungslinie (112); und
optional Entfernen eines zweiten Teils (110) des Werkstücks (100), welcher zwischen der dritten Schädigungslinie (112) und der ersten Schädigungslinie (102) angeordnet ist;
wobei optional das Erzeugen der dritten Schädigungslinie (112) zeitlich vor dem Erzeugen der ersten Schädigungslinie (102) erfolgt.

6. Trennvorrichtung nach Anspruch 5, wobei das Entfernen des zweiten Teils (110) des Werkstücks (100) aufweist:
Erzeugen von mindestens einer vierten Schädigungslinie (114) in dem zweiten Teil (110) des Werkstücks (100);
wobei die mindestens eine vierte Schädigungslinie (114) sich in einer Richtung von der dritten Schädigungslinie (112) weg erstreckt.

7. Trennvorrichtung nach Anspruch 6,
wobei die mindestens eine vierte Schädigungslinie (114) eine fünfte Schädigungslinie (116) und eine sechste Schädigungslinie (118) umfasst; und wobei die fünfte Schädigungslinie (116) und die sechste Schädigungslinie (118) geformt und angeordnet sind, so dass der zweite Teil des Werkstücks (100) einen Werkstückabschnitt (120), welcher zwischen der fünften Schädigungslinie (116) und der sechsten Schädigungslinie (118) angeordnet ist, nach einer Trennung des Werkstücks (100) entlang der fünften Schädigungslinie (116) und der sechsten Schädigungslinie (118) in einer Richtung (122) von der dritten Schädigungslinie (112) weg freigibt.

8. Trennvorrichtung nach einem der Ansprüche 5 bis 7, wobei das Trennen des Werkstücks (100) entlang der ersten Schädigungslinie (102) durch einen ersten Trennmechanismus erfolgt und ein Trennen entlang der dritten Schädigungslinie (112) durch einen zweiten Trennmechanismus erfolgt, der verschieden ist von dem ersten Trennmechanismus;
wobei optional der erste Trennmechanismus und der zweite Trennmechanismus ein Erzeugen einer mechanischen Spannung in dem Werkstück (100) umfasst;
wobei optional das Erzeugen einer mechanischen Spannung in dem Werkstück (100) durch mindestens eines von dem folgenden erfolgt:
eine mechanische Krafteinwirkung;
ein Induzieren von mindestens einem Teil der mechanischen Spannung, beispielsweise ein thermisches Induzieren von mindestens einem Teil der mechanischen Spannung.

9. Verfahren aufweisend:
Erzeugen einer ersten Schädigungslinie (102) in einem Werkstück (100), wobei die erste Schädigungslinie (102) mit Abstand von einer gewünschten Konturlinie (104) angeordnet ist und einen ersten Teil (106) des Werkstücks (100) definiert;
wobei der erste Teil (106) des Werkstücks (100) auf einer der gewünschten Konturlinie (104) abgewandten Seite der ersten Schädigungslinie (102) angeordnet ist und sich von der ersten Schädigungslinie (102) weg erstreckt; und
Entfernen des ersten Teils (106) des Werkstücks (100).

10. Verfahren nach Anspruch 9, ferner aufweisend
Trennen des Werkstücks (100) entlang der ersten Schädigungslinie (102);
wobei das Entfernen des ersten Teils (106) des Werkstücks (100) nach dem Trennen des Werkstücks (100) entlang der ersten Schädigungslinie (102) erfolgt.

11. Verfahren nach Anspruch 9 oder 10, das Entfernen des ersten Teils (106) des Werkstücks (100) aufweisend
Erzeugen von mindestens einer zweiten Schädigungslinie (108) in dem ersten Teil (106) des Werkstücks (100);
Trennen des ersten Teils (106) des Werkstücks (100) entlang der mindestens einen zweiten Schädigungslinie (108);
insbesondere wobei die mindestens eine zweite Schädigungslinie (108) sich in einer Richtung von der ersten Schädigungslinie (102) weg erstreckt.

12. Verfahren nach irgendeinem der Ansprüche 9 bis 11, ferner aufweisend
Erzeugen einer dritten Schädigungslinie (112) entlang der gewünschten Konturlinie (104);
optional Trennen des Werkstücks (100) entlang der dritten Schädigungslinie (112); und
optional Entfernen eines zweiten Teils (110) des Werkstücks (100), welcher zwischen der dritten Schädigungslinie (112) und der ersten Schädigungslinie (102) angeordnet ist;
wobei optional das Erzeugen der dritten Schädigungslinie (112) zeitlich vor dem Erzeugen der ersten Schädigungslinie (102) erfolgt.

13. Verfahren nach Anspruch 12, wobei das Entfernen des zweiten Teils (110) des Werkstücks (100) aufweist:
Erzeugen von mindestens einer vierten Schädigungslinie (114) in dem zweiten Teil (110) des Werkstücks (100);
wobei die mindestens eine vierte Schädigungslinie (114) sich in einer Richtung von der dritten Schädigungslinie (112) weg erstreckt.

14. Verfahren nach Anspruch 13,
wobei die mindestens eine vierte Schädigungslinie (114) eine fünfte Schädigungslinie (116) und eine sechste Schädigungslinie (118) umfasst; und wobei die fünfte Schädigungslinie (116) und die sechste Schädigungslinie (118) geformt und angeordnet sind, so dass der zweite Teil des Werkstücks (100) einen Werkstückabschnitt (120), welcher zwischen der fünften Schädigungslinie (116) und der sechsten Schädigungslinie (118) angeordnet ist, nach einer Trennung des Werkstücks (100) entlang der fünften Schädigungslinie (116) und der sechsten Schädigungslinie (118) in einer Richtung (122) von der dritten Schädigungslinie (112) weg freigibt.

15. Verfahren nach einem der Ansprüche 12 bis 14, wobei das Trennen des Werkstücks (100) entlang der ersten Schädigungslinie (102) durch einen ersten Trennmechanismus erfolgt und ein Trennen entlang der dritten Schädigungslinie (112) durch einen zweiten Trennmechanismus erfolgt, der verschieden ist von dem ersten Trennmechanismus;
wobei optional der erste Trennmechanismus und der zweite Trennmechanismus ein Erzeugen einer mechanischen Spannung in dem Werkstück (100) umfasst;
wobei optional das Erzeugen einer mechanischen Spannung in dem Werkstück (100) durch mindestens eines von dem folgenden erfolgt:
eine mechanische Krafteinwirkung;
ein Induzieren von mindestens einem Teil der mechanischen Spannung, beispielsweise ein thermisches Induzieren von mindestens einem Teil der mechanischen Spannung.
